# EUROPEAN PATENT SPECIFICATION

(11) **EP 4 044 179 B1**
(45) Date of publication and mention of the grant of the patent: **13.11.2024**
(21) Application number: 21871657.9
(22) Date of filing: 27.09.2021
(51) Int. Cl.: G08G 5/00, G10L 15/26, B64D 47/00, B64D 45/00

(54) **ON-BOARD INFORMATION ASSISTING SYSTEM AND METHOD**
SYSTEM UND VERFAHREN ZUR UNTERSTÜTZUNG VON BORDEIGENEN INFORMATIONEN
SYSTÈME ET PROCÉDÉ D'AIDE À L'INFORMATION EMBARQUÉ

(30) Priority: 27.09.2020 CN 202011033062; 10.12.2020 WO PCT/CN2020/135366
(43) Date of publication of application: 17.08.2022
(73) Proprietor: Comac Beijing Aircraft Technology Research Institute, Beijing 102211 (CN); Commercial Aircraft Corporation Of China, Ltd., Shanghai 200131 (CN)
(72) Inventor: XU, Shuhan, Beijing 102211 (CN); ZENG, Rui, Beijing 102211 (CN); LI, Bo, Beijing 102211 (CN); ZHANG, Jiong, Beijing 102211 (CN)
(74) Representative: Gille Hrabal Partnerschaftsgesellschaft mbB Patentanwälte
(86) International application number: PCT/CN2021/120852
(87) International publication number: WO 2022/063288

(56) References cited:
- WO-A1-2020/147407
- CN-A- 101 916 565
- CN-A- 102 708 865
- CN-A- 106 531 158
- CN-A- 109 949 817
- CN-A- 110 335 609
- CN-A- 110 956 955
- CN-A- 111 210 825
- CN-A- 111 524 504
- CN-A- 111 667 831
- CN-A- 112 185 390
- US-A1- 2007 288 129
- US-A1- 2008 162 118
- US-A1- 2014 074 467
- US-A1- 2014 244 246
- US-A1- 2016 372 117
- US-A1- 2017 330 560
- US-A1- 2017 365 177
- US-A1- 2019 228 781
- US-A1- 2019 355 352
- WAHEED K ET AL: "A robust algorithm for detecting speech segments using an entropic contrast", THE 2002 45TH. MIDWEST SYMPOSIUM ON CIRCUITS AND SYSTEMS. CONFERENCE PROCEEDINGS. TULSA, OK, AUG. 4 - 7, 2002; [MIDWEST SYMPOSIUM ON CIRCUITS AND SYSTEMS], NEW YORK, NY : IEEE, US, vol. 3, 4 August 2002 (2002-08-04), pages 328 - 331, XP010635565, ISBN: 978-0-7803-7523-9

## Description

### TECHNICAL FIELD

The present invention relates to the field of aviation, in particular to an on-board information assistance system and method, to assist pilots in listening, replaying, and querying air traffic control informations during flight missions, improve the convenience and accuracy of obtaining control instructions, reduce communication costs and provide safety guarantees for aircraft navigation.

### BACKGROUND

In air traffic control, the controller communicates with the pilot through land-air voice calls, and the controller issues control instructions to the pilot, instructing the pilot to operate the aircraft as required. The role of the controller is critical. Many important decisions in the aircraft navigation are made by the controller based on the content of the dialogue between him/her and the pilot. Due to the professionalism, regional differences and personnel complexity of air traffic control, in addition to noisy environments, communication link interference and other factors, there are a large quantity of professional terms, unique regional names, mixed Chinese and English, and accent differences in the air traffic control speech. During the actual operation, a minor mistake such as mishearing or omission of information is quite likely to cause the pilot to make incorrect decisions based on the controller's speech, resulting in huge losses in the aviation field. Therefore, the pilot on the plane urgently needs an auxiliary means in the process of communicating with the controller.

With the development of natural language processing technology, speech recognition has been proposed as a technical approach to assist air traffic control information. However, it is difficult to achieve accurate and efficient speech recognition in the air traffic control system, which is mainly reflected in some aspects as follows: First, the environment in which the air traffic control system is located is special, which directly determines the particularity of the air traffic control speech recognition in acquiring speech information. Next, pronunciation of numbers, letters, flight numbers, runways, and the like are specifically defined in the air traffic control system, and the structure and sequence of dialogue sentences in the air traffic control system need follow specified rules. As a result, ordinary speech recognition products cannot be applied to air traffic control dialogue recognition. Furthermore, because minor speech recognition errors in the air traffic control system may also cause huge losses, the air traffic control speech recognition system has strict requirements on the accuracy of recognition.

There are some speech recognition methods dedicated to air traffic control in the related art, but generally the accuracy is not high enough, and therefore they are mostly used in ground scenarios, to help ground-to-air communication data analysis operations such as control command quality assessment, post-event analysis, and workload assessment. Therefore, a method and a system are urgently needed to assist pilots on board, improve the convenience and accuracy of air traffic control communication, and provide safety guarantees for aircraft navigation.

The patent publication no. US2014244246A1 discloses a speech transmission system for reducing accent-induced anomalies in air-to-ground, ground-to-air, and air-to-air communications. In the system in question, a first audio stream is comprised of a plurality of words, upon which a plurality of independent voice-to-text conversions are performed. If it is determined that at least one of the plurality of independent voice-to-text conversions is error free, a text-to-voice conversion of the at least one error-free voice-to-text conversion is performed to create a second audio stream.

The patent publication no. US2017365177A1 discloses a method, system, and computer program product for providing an indication that a received vehicle operation instruction can be performed. During operation of a vehicle a vehicle operation instruction is received and at least one vehicle performance parameter to perform the vehicle operation instruction is calculated. Then, a determination is made as to whether the calculated at least one vehicle performance parameter exceeds performance limitations of the vehicle. If at least one performance parameter exceeds a performance limitation, then a first alert is generated and output. The system can include a speech-to-text module that can receive spoken instructions from the radio transceiver and convert the spoken instructions to text. In various aspects, the speech-to-text module can also convert a text-based automated response generated by the system into a spoken response that can be transmitted via the radio transceiver to an air traffic controller.

The patent publication no. US2017330560 A1 discloses methods and systems that are provided for processing speech inputs for a controlling one or more vehicle systems of a vehicle. The method includes receiving speech input from an audio channel; performing, by a processor, speech recognition on the speech input to obtain recognized results; determining, by a processor, an accuracy level of the audio channel based on a comparison of the recognized results and predictive phraseology; determining, by a processor, an integrity level of the audio channel based on situational awareness information; communicating the recognized results, accuracy level, and the integrity level to a vehicle system; and selectively using the recognized results by the vehicle system based on the accuracy level and the integrity level. US2017330560A1 discloses methods and systems for processing speech inputs for controlling one or more vehicle systems of a vehicle. Various aspects of speech recognition and/or processing are also disclosed in US2007/288129A1, Waheed K et al.: "A robust algorithm for detecting speech segments using an entropic contrast", the 2002 45th midwest symposium on circuits and systems. Conference proceedings. Tulsa, OK, Aug. 4 - 7, 2020; [Midwest symposium on circuits and systems], New York, NY, IEEE, US, vol. 3, 4 August 2002 (2002-08-04), pages 328-331, XP010635565, ISBN: 978-0-7803-7523-9, WO2020/147407A1, US2014/074467A1, CN106531158A, and US2019/228781A1. Document US9666178 B2 discloses a device for aiding communication in the aeronautical domain, including a transceiver and data processor assembly that records audio messages corresponding to all the incoming and outgoing audio communications, transcribes the messages into textual messages in real time, displays the textual messages, and enables an audio playback of the audio messages.

The speech recognition methods dedicated to air traffic control in the above-mentioned documents still have the problems of low accuracy and difficulties associated with the analysis of speech data. Therefore, the need for a method and system that provide high accuracy and analysis still remains.

At present, there is no solution proposed to resolve the foregoing problem.

### SUMMARY

The present invention provides an on-board information assistance system and method, which is used to recognize, process, and use air recorded traffic control speech information according to the appended claims.

### BRIEF DESCRIPTION OF THE DRAWINGS

To describe the technical solutions in the embodiments of the present invention more clearly, the accompanying drawings required for the embodiments are briefly described below. Apparently, the accompanying drawings in the following description show merely some embodiments of the present invention, and a person of ordinary skill in the art may still derive other accompanying drawings from these accompanying drawings without creative efforts.
FIG. 1 is a schematic diagram of an on-board information assistance system according to an embodiment of the present invention;
FIG. 2 is a flowchart of an on-board information assistance method according to an embodiment of the present invention; and
FIG. 3 is a schematic effect diagram of the on-board information assistance system according to an embodiment of the present invention.

### DETAILED DESCRIPTION OF THE EMBODIMENTS

To enable those skilled in the art to better understand the solutions of the present invention, the technical solutions in the embodiments of the present invention are clearly and completely described below with reference to the accompanying drawings in the embodiments of the present invention.
Obviously, the described embodiments are only some, but not all of embodiments of the present invention. All other embodiments obtained by a person of ordinary skill in the art on the basis of the embodiments of the present invention without creative efforts shall fall within the protection scope of the present invention.

Terms "first" and "second" in the specification and claims of the present invention and the foregoing accompanying drawings are used for distinguishing similar objects and not necessarily used for describing a specific sequence. It should be understood that the data used in such a way may be exchanged under proper conditions to make it possible to implement the described embodiments of the present invention in other sequences apart from those illustrated or described here. In addition, terms "comprise", "include" and any variations thereof are intended to cover non-exclusive inclusions. For example, a process, a method, a system, a product or a device that includes a series of steps or units is not necessarily limited to the clearly listed steps or units, but may include other steps or units that are not clearly listed or are inherent to the process, the method, the product or the device.

According to an embodiment of the present invention, a method embodiment of an on-board information assistance method is provided. It should be noted that the steps shown in the flowchart of the accompanying drawings can be performed in a computer system based on a set of computer-executable instructions. In addition, although a logical order is shown in the flowchart, in some cases, steps shown or described may be performed in an order different from that herein.

### Embodiment 1

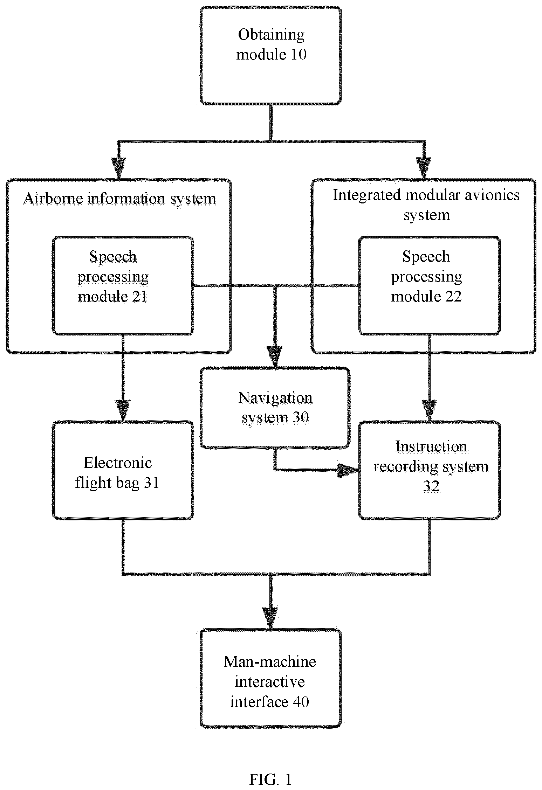

FIG. 1 is a flowchart of an on-board information assistance system according to an embodiment of the present invention. As shown in FIG. 1, the system includes the following modules:

An obtaining module (10) is installed in an airborne communication system, and configured to obtain speech information, where the speech information is real-time air-ground communication speech information.

The speech information is acquired from an air-ground communication link. Specifically, to capture audio and speech transmission data between land and air in real time in the embodiments of the present invention, it is necessary to establish a dedicated speech communication link, and set up a speech capture program to record and intercept the speech data transmitted in the speech communication link, and transmit all the speech data to a processor for subsequent speech analysis and processing. The speech information may be acquired by using a land control device or an airborne speech control device. The control device for speech capture and transmission is not specifically limited thereto.

The speech information may be acquired by using a speech communication link or real-time communication data. Because the real time is usually important when the land and air pilots communicate with each other. The real-time voice calls can be kept and updated constantly on land and in the air to achieve the safety effect. Therefore, the speech needs to captured in real time according to the data in the communication link. An increasingly small capture latency causes an increasingly small impact on the coordinated control of the speech over land and air.

A speech processing module 20 is installed in the airborne information system and a speech processing module 20 is installed in an integrated modular avionics system. The speech processing modules are configured to convert the speech information into text information.

The speech processing modules convert the speech information into text information in the following manners:
S21: Receive the speech information obtained by the obtaining module (10).
S22: Segment speech data according to information entropy of the speech data to obtain a single piece of speech data.

The speech information entropy is obtained according to the speech information. The speech information entropy represents the complexity of the speech information. In this embodiment of the present invention, after the complexity of the speech data is obtained, how to segment speech data is automatically determined according to the complexity and the length of speech data, and therefore, speech recognition can be performed more effectively to convert segmented speech data into word information. The sentences in the speech information are segmented according to the speech information entropy, and the segmented speech data is outputted as the single piece of speech data.

S23: Perform speech recognition according to the single piece of speech data to generate text data.

The speech processing module 21 in the airborne information system outputs first text information; and the first text information is outputted to an electronic flight bag 31 and is finally displayed on a man-machine interactive interface 40.

The speech processing module 22 in the integrated modular avionics system outputs second text information; and the second text information is outputted to an instruction recording system 32 and is finally displayed on a man-machine interactive interface 40.

The speech processing module 21 in the airborne information system and the speech processing module 22 in the integrated modular avionics system use heterogeneous speech information processing modules. The two modules back up each other, replacing the process of mutual confirmation of flight crews, reducing workload and improving flight efficiency.

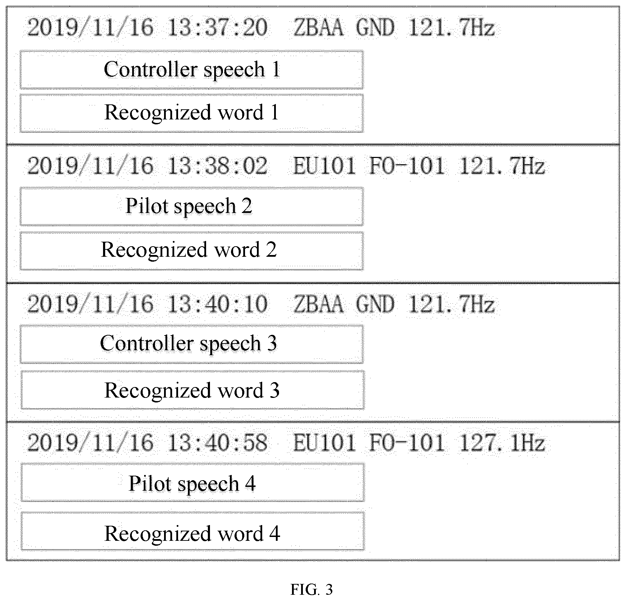

The displaying effect of the man-machine interactive interface 40 is shown in FIG. 3, and the displaying process specifically includes:
To recognize the segmented single piece of speech data and convert the recognized data into text data corresponding to the content of the single piece of speech data, it is necessary to recognize each frame of speech data in the single piece of speech data by using a speech recognition algorithm, and then recognized Chinese characters or characters are spliced and merged to obtain a complete text sentence and output it.

For example, if the played content of the single piece of speech data is "there is a thunderstorm in the air, land as soon as possible", the text content recognized by using the speech recognition algorithm includes "there is a thunderstorm in the air", ",", "land as soon as possible". Therefore, in the end, through the speech-text splicing operation, the foregoing recognized text content is spliced to obtain the text data of "there is a thunderstorm in the air, land as soon as possible", and then the text data is showed to the pilot, prompting the pilot to land as soon as possible.

Optionally, the step of displaying the single piece of speech data and the text data includes: playing the single piece of speech data; and displaying corresponding text data according to the played single piece of speech data.

Specifically, after the speech data is converted into text data, according to the requirements of pilots and ground control personnel, in the embodiment of the present invention, the single piece of speech data and text data are displayed simultaneously, that is, the corresponding text data is displayed while the speech data is played, such that the user can intuitively understand the content of the speech without being affected by the other party's accent and other factors. FIG. 3 is a schematic effect diagram of an on-board air traffic control information assistance system according to an embodiment of the present invention. As shown in FIG. 3, when taping/clicking to play a speech, the user can see the displayed text below the speech, increasing the accuracy of speech information obtained by the user.

Because some important speech data needs to be played more than once to obtain complete speech information or commands, each single piece of speech data can be played at least once, that is, played multiple times according to user' requirements to completely understand the speech content or execute commands in the speech.

The convenience and accuracy can be increased when the control instruction is obtained in the foregoing steps.

A navigation system 30 receives a navigation instruction in the text information for flight guidance; and the navigation instruction is recorded in the instruction recording system 32.

The navigation instruction information is extracted from the text information, and converted into an instruction format acceptable by the aircraft navigation system for flight guidance. The navigation instruction is further recorded in the instruction recording system.

### Embodiment 2

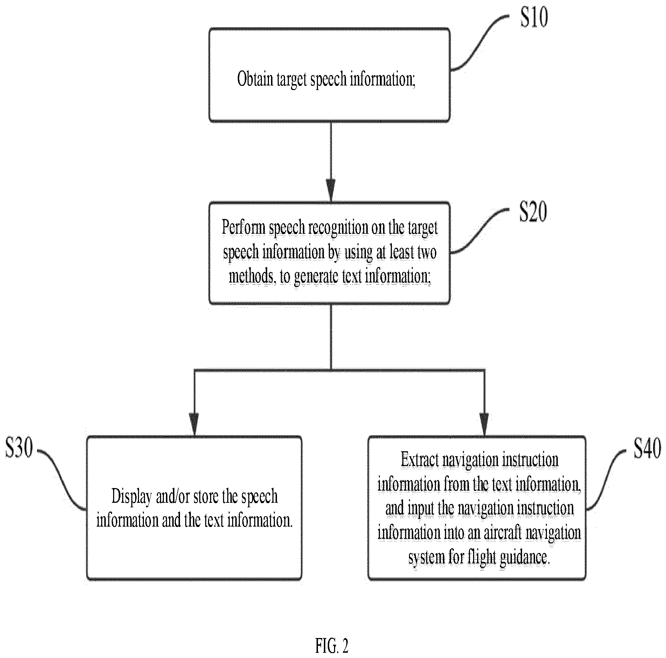

FIG. 2 is a flowchart of an on-board information assistance method according to an embodiment of the present invention. The method corresponds to the on-board information assistance system in Embodiment 1, and specifically includes:
S10: Obtain target speech information.

The speech information is acquired from an air-ground communication link. Specifically, to capture audio and speech transmission data between land and air in real time in the embodiments of the present invention, it is necessary to establish a dedicated speech communication link, and set up a speech capture program to record and intercept the speech data transmitted in the speech communication link, and transmit all the speech data to a processor for subsequent speech analysis and processing. The speech information may be acquired by using a land control device or an airborne speech control device. The control device for speech capture and transmission is not specifically limited thereto.

The speech information may be acquired by using a speech communication link or real-time communication data. Because the real time is usually important when the land and air pilots communicate with each other. The real-time voice calls can be kept and updated constantly on land and in the air to achieve the safety effect. Therefore, the speech needs to captured in real time according to the data in the communication link. An increasingly small capture latency causes an increasingly small impact on the coordinated control of the speech over land and air.

S20: Perform speech recognition on the target speech information by using at least two methods, to generate text information.

In this embodiment, two heterogeneous computing and processing modules installed respectively in the airborne information system and the integrated modular avionics system are used for speech recognition. The methods implemented in the two modules back up each other, replacing the process of mutual confirmation of flight crews, reducing the workload, and improving flight efficiency.

In this embodiment, one of the used speech recognition methods is as follows:
S21: Receive the speech information obtained by the obtaining module (10).
S22: Segment speech data according to information entropy of the speech data to obtain a single piece of speech data.
   The speech information entropy is obtained according to the speech information. The speech information entropy represents the complexity of the speech information. In this embodiment of the present invention, after the complexity of the speech data is obtained, how to segment speech data is automatically determined according to the complexity and the length of speech data, and therefore, speech recognition can be performed more effectively to convert segmented speech data into word information. The sentences in the speech information are segmented according to the speech information entropy, and the segmented speech data is outputted as the single piece of speech data.
S23: Perform speech recognition according to the single piece of speech data to generate text data.
S30: Display and/or store the speech information and the text information.

Specifically, after the speech information is converted into text information, according to the requirements of pilots and ground control personnel, in the embodiment of the present invention, the single piece of speech data and text data are displayed simultaneously, that is, the corresponding text data is displayed while the speech data is played, such that the user can intuitively understand the content of the speech without being affected by the other party's accent and other factors. FIG. 3 is a schematic effect diagram of an on-board air traffic control information assistance system according to an embodiment of the present invention. As shown in FIG. 3, when taping/clicking to play a speech, the user can see the displayed text below the speech, increasing the accuracy of speech information obtained by the user.

The method further includes S40: Extract navigation instruction information from the text information, and input the navigation instruction information into an aircraft navigation system for flight guidance, which specifically includes:
The navigation instruction information is extracted from the text information, and converted into an instruction format acceptable by the aircraft navigation system for flight guidance. The navigation instruction is further recorded in the instruction recording system.

In some embodiments provided by the present application, it should be understood that the disclosed technical content may be implemented in other manners. The described apparatus embodiment is merely an example. For example, the unit division may be a logical function division, and there may be other division manners in actual implementation. For example, a plurality of units and components may be combined or integrated into another system, or some features may be ignored or may not be performed. In addition, the displayed or discussed mutual couplings or direct couplings or communication connections may be implemented by using some interfaces. The indirect couplings or communication connections between the units or modules may be implemented in electric, mechanical, or other forms.

The units described as separate parts may or may not be physically separate, and parts displayed as units may or may not be physical units, may be located in one position, or may be distributed on a plurality of units. Some or all of the modules may be selected according to actual requirements to implement the solution of the embodiment.

In addition, functional units in the embodiments of the present invention may be integrated into one processing unit, or each of the modules may exist alone physically, or two or more modules are integrated into one unit. The foregoing integrated unit may be implemented in a form of hardware or software functional units.

If the integrated unit is implemented in the form of the software functional unit and sold or used as an independent product, it may be stored in a computer-readable storage medium. Based on such an understanding, the technical solutions of the present invention are essentially embodied in the form of a software product, or some contributing to the related art or all or some of the technical solutions can also be embodied in the same form. The computer software product is stored in a storage medium and includes some instructions to cause a computer device (which may be a personal computer, a server, a network device or the like) to execute all or some of the steps of the methods described in the embodiments of the present invention. The foregoing storage medium includes a medium storing program code such as a U disk, a read-only memory (ROM), a random access memory (RAM), a mobile hard disk, a magnetic disk, an optical disk or the like.

## Claims

1. An on-board information assistance system, comprising:
an obtaining module (10), installed in an airborne communication system, and configured to obtain real-time air-ground communication speech information;
a speech processing module (21), installed in an airborne information system, configured to convert the speech information into text information,
a speech processing module (22) installed in an integrated modular avionics system, and configured to convert the speech information into text information,
the speech processing module (21) in the airborne information system is configured to output text information; that is displayed on a man-machine interactive interface (40);
wherein the speech processing module (22) in the integrated modular avionics system is configured to output text information, which is outputted to an instruction recording system (32) and is finally displayed on the man-machine interactive interface (40); and
a navigation system (30) is configured to receive a navigation instruction extracted from the text information for flight guidance,
the instruction recording system (32) is configured to record the navigation instruction,
wherein one of the speech processing modules (21, 22) is configured to convert the speech information into text information in the following manners:
segmenting speech data according to information entropy of the speech data to obtain a single piece of speech data; and
performing speech recognition according to the single piece of speech data to generate text data and
the speech processing module (21) in the airborne information system and the speech processing module (22) in the integrated modular avionics system are two heterogeneous computing and processing modules,
wherein the man-machine interactive interface (40) is configured to simultaneously play the single piece of speech data and to display corresponding text data according to the single piece of speech data,
wherein the man-machine interactive interface (40) is configured such that a representation of the single piece of speech is displayed together with the corresponding text data, and a user can tap or click to play the speech, and the recognized text is displayed below the representation of the speech,
wherein the man-machine interactive interface (40) is configured such that each single piece of speech data can be played multiple times according to a user's requirements.

2. An on-board information assistance method, applied in an air vehicle and specifically comprising:
obtaining target real-time air-ground communication speech information;
processing the speech information in order to convert the speech information into text information;
displaying and storing the speech information and the text information on a man-machine interactive interface (40) and
extracting navigation instruction information from the text information, and inputting the navigation instruction information into an aircraft navigation system for flight guidance
**characterized by**
performing speech recognition on the target speech information by using at least two methods to generate text information, wherein said two methods are implemented by two heterogeneous computing and processing modules, wherein one of the at least two methods for performing the speech recognition comprises: segmenting speech data according to information entropy of the speech data to obtain a single piece of speech data; and performing speech recognition according to the single piece of speech data to generate text data,
wherein the displaying the speech information and the text information specifically comprises:
playing a single piece of speech data by the man-machine interactive interface (40); and
simultaneously displaying corresponding text data according to the played single piece of speech data by the man-machine interactive interface (40),
wherein a representation of the single piece of speech is displayed together with the corresponding text data, and a user can tap or click to play the speech, and the recognized text is displayed below the representation of the speech,
wherein each single piece of speech data can be played multiple times according to a user's requirements,
wherein one of said methods is implemented in a speech processing module (21), installed in an airborne information system and another one of said methods is implemented in a speech processing module (22) installed in an integrated modular avionics system,
outputting text information outputted by the one of the at least two methods for performing speech processing implemented in the integrated modular avionics system to an instruction recording system (32) and displaying said text information on a man-machine interface,
displaying text information outputted by the other one of the at least two methods for performing speech processing implemented in the airborne information system on the man-machine interface,
recording said navigation instruction in the instruction recording system (32).

## Patentansprüche

1. Ein bordseitiges Informationsunterstützungssystem, umfassend:
ein Erfassungsmodul (10), das in einem Bordkommunikationssystem installiert und dazu eingerichtet ist, Echtzeit-Luft-Boden-Kommunikations-Sprachinformation zu erhalten;
ein Sprachverarbeitungsmodul (21), das in einem Bordinformationssystem installiert und dazu eingerichtet ist, die Sprachinformation in Textinformation umzuwandeln,
ein Sprachverarbeitungsmodul (22), das in einem integrierten modularen Avioniksystem installiert und dazu eingerichtet ist, die Sprachinformation in Textinformation umzuwandeln,
das Sprachverarbeitungsmodul (21) in dem Bordinformationssystem ist dazu eingerichtet, Textinformationen auszugeben, die auf einer interaktiven Mensch-Maschine-Schnittstelle (40) angezeigt werden;
wobei das Sprachverarbeitungsmodul (22) in dem integrierten modularen Avioniksystem dazu eingerichtet ist, Textinformationen auszugeben, die an ein Anweisungsaufzeichnungssystem (32) ausgegeben und schließlich auf der interaktiven Mensch-Maschine-Schnittstelle (40) angezeigt werden; und
ein Navigationssystem (30) ist dazu eingerichtet, eine aus den Textinformationen extrahierte Navigationsanweisung zur Flugführung zu empfangen,
das Anweisungsaufzeichnungssystem (32) ist dazu eingerichtet, die Navigationsanweisung aufzuzeichnen,
wobei eines der Sprachverarbeitungsmodule (21, 22) dazu eingerichtet ist, die Sprachinformation auf die folgende Weise in Textinformation umzuwandeln:
Segmentieren von Sprachdaten gemäß der Informationsentropie der Sprachdaten, um ein einzelnes Stück Sprachdaten zu erhalten; und
Durchführen einer Spracherkennung gemäß dem einzelnen Stück Sprachdaten, um Textdaten zu erzeugen, und
das Sprachverarbeitungsmodul (21) in dem Bordinformationssystem und das Sprachverarbeitungsmodul (22) in dem integrierten modularen Avioniksystem sind zwei heterogene Rechen- und Verarbeitungsmodule,
wobei die interaktive Mensch-Maschine-Schnittstelle (40) dazu eingerichtet ist, gleichzeitig das einzelne Stück Sprachdaten abzuspielen und entsprechende Textdaten gemäß dem einzelnen Stück Sprachdaten anzuzeigen,
wobei die interaktive Mensch-Maschine-Schnittstelle (40) so eingerichtet ist, dass eine Darstellung des einzelnen Sprachstücks zusammen mit den entsprechenden Textdaten angezeigt wird und ein Benutzer tippen oder klicken kann, um die Sprache abzuspielen, und der erkannte Text unterhalb der Darstellung der Sprache angezeigt wird,
wobei die interaktive Mensch-Maschine-Schnittstelle (40) so eingerichtet ist, dass jede einzelne Sprachinformation gemäß den Anforderungen eines Benutzers mehrfach abgespielt werden kann.

2. Ein bordseitiges Informationsunterstützungsverfahren, das in einem Luftfahrzeug angewendet wird und speziell Folgendes umfasst
Erhalten von Echtzeit-Luft-Boden-Kommunikations-Ziel-Sprachinformation;
Verarbeiten der Sprachinformation, um die Sprachinformation in Textinformation umzuwandeln;
Anzeigen und Speichern der Sprachinformationen und der Textinformationen auf einer interaktiven Mensch-Maschine-Schnittstelle (40) und
Extrahieren von Navigationsanweisungsinformationen aus den Textinformationen und Eingeben der Navigationsanweisungsinformationen in ein Flugzeugnavigationssystem zur Flugführung
**gekennzeichnet durch**
Durchführen von Spracherkennung an den Ziel-Sprachinformationen unter Verwendung von mindestens zwei Verfahren zum Erzeugen von Textinformationen, wobei die zwei Verfahren durch zwei heterogene Rechen- und Verarbeitungsmodule implementiert werden, wobei eines der mindestens zwei Verfahren zum Durchführen der Spracherkennung umfasst: Segmentieren von Sprachdaten gemäß der Informationsentropie der Sprachdaten, um ein einzelnes Stück Sprachdaten zu erhalten; und Durchführen von Spracherkennung gemäß dem einzelnen Stück Sprachdaten, um Textdaten zu erzeugen,
wobei das Anzeigen der Sprachdaten und der Textdaten speziell Folgendes umfasst:
Abspielen eines einzelnen Stücks von Sprachdaten durch die interaktive Mensch-Maschine-Schnittstelle (40); und
gleichzeitiges Anzeigen von entsprechenden Textdaten gemäß dem abgespielten einzelnen Stück Sprachdaten durch die interaktive Mensch-Maschine-Schnittstelle (40),
wobei eine Darstellung des einzelnen Sprachstücks zusammen mit den entsprechenden Textdaten angezeigt wird und ein Benutzer tippen oder klicken kann, um die Sprache abzuspielen, und der erkannte Text unterhalb der Darstellung der Sprache angezeigt wird,
wobei jedes einzelne Stück Sprachdaten gemäß den Anforderungen eines Benutzers mehrfach abgespielt werden kann,
wobei eines der Verfahren in einem Sprachverarbeitungsmodul (21) implementiert ist, das in einem Bordinformationssystem installiert ist, und ein anderes der Verfahren in einem Sprachverarbeitungsmodul (22) implementiert ist, das in einem integrierten modularen Avioniksystem installiert ist,
Ausgeben von Textinformationen, die von dem einen der mindestens zwei Verfahren zur Durchführung der Sprachverarbeitung, das in dem integrierten modularen Avioniksystem implementiert ist, ausgegeben werden, an ein Anweisungsaufzeichnungssystem (32) und Anzeigen der Textinformationen auf einer Mensch-Maschine-Schnittstelle,
Anzeigen von Textinformationen, die von dem anderen der mindestens zwei Verfahren zur Durchführung von Sprachverarbeitung, das in dem Bordinformationssystem implementiert ist, ausgegeben werden, auf der Mensch-Maschine-Schnittstelle,
Aufzeichnen der Navigationsanweisung in dem Anweisungsaufzeichnungssystem (32).

## Revendications

1. Un système d'aide d'information embarqué, comprenant :
un module d'obtention (10), installé dans un système de communication aéroporté, et configuré pour obtenir des informations de communication de parole air-sol en temps réel ;
un module de traitement de parole (21), installé dans un système d'information aéroporté, configuré pour convertir les informations de parole en informations textuelles,
un module de traitement de parole (22) installé dans un système avionique modulaire intégré et configuré pour convertir les informations de parole en informations textuelles,
le module de traitement de parole (21) du système d'information aéroporté est configuré pour émettre des informations textuelles ; qui sont affichées sur une interface interactive homme-machine (40) ;
dans lequel le module de traitement de parole (22) dans le système avionique modulaire intégré est configuré pour émettre des informations textuelles, qui sont émises à un système d'enregistrement d'instructions (32) et sont finalement affichées sur l'interface interactive homme-machine (40) ; et
un système de navigation (30) est configuré pour recevoir une instruction de navigation extraite des informations textuelles pour le guidage de vol,
le système d'enregistrement d'instructions (32) est configuré pour enregistrer l'instruction de navigation,
dans lequel l'un des modules de traitement de parole (21, 22) est configuré pour convertir les informations de parole en informations textuelles de la manière suivante
segmenter les données de parole en fonction de l'entropie d'information des données de parole afin d'obtenir un morceau unique de données de parole ; et
effectuer la reconnaissance de parole en fonction du morceau unique de données de parole afin de générer des données textuelles et
le module de traitement de parole (21) dans le système d'information aéroporté et le module de traitement de parole (22) dans le système avionique modulaire intégré sont deux modules de calcul et de traitement hétérogènes,
dans lequel l'interface interactive homme-machine (40) est configurée pour jouer simultanément le morceau unique de données de parole et pour afficher des données textuelles correspondantes selon le morceau unique de données de parole,
dans lequel l'interface interactive homme-machine (40) est configurée de manière à ce qu'une représentation du morceau unique de parole soit affichée avec les données textuelles correspondantes, et qu'un utilisateur puisse taper ou cliquer pour jouer la parole, et que le texte reconnu soit affiché sous la représentation de la parole,
dans lequel l'interface interactive homme-machine (40) est configurée de manière à ce que chaque morceau unique de données de parole puisse être joué plusieurs fois en fonction des besoins d'un utilisateur.

2. Méthode d'aide d'information embarquée, appliquée dans un véhicule aérien et comprenant spécifiquement :
obtenir des informations de communication de parole air-sol en temps réel ;
traiter les informations de parole afin de convertir les informations de parole en informations textuelles ;
afficher et stocker les informations de parole et les informations textuelles sur une interface interactive homme-machine (40) et
extraire des informations d'instruction de navigation des informations textuelles, et entrer les informations d'instruction de navigation dans un système de navigation d'aéronef pour le guidage de vol
**caractérisé par**
effectuer la reconnaissance de parole sur les informations de parole cibles en utilisant au moins deux méthodes pour générer des informations textuelles, dans lequel lesdites deux méthodes sont réalisées par deux modules de calcul et de traitement hétérogènes, dans lequel une des au moins deux méthodes pour effectuer la reconnaissance de parole comprend : segmenter des données de parole en fonction de l'entropie d'information des données de parole pour obtenir un morceau unique de données de parole ; et effectuer la reconnaissance de parole en fonction du morceau unique de données de parole pour générer des données textuelles,
dans laquelle l'affichage des informations de parole et des informations textuelles comprend spécifiquement :
jouer un morceau unique de données de parole par l'interface interactive homme-machine (40) ; et
afficher simultanément des données textuelles correspondantes en fonction du morceau unique de données de parole joué par l'interface interactive homme-machine (40),
dans laquelle une représentation du morceau unique de parole est affichée ensemble avec les données textuelles correspondantes, et un utilisateur peut taper ou cliquer pour jouer la parole, et le texte reconnu est affiché sous la représentation de la parole,
dans laquelle chaque morceau unique de données de parole peut être joué plusieurs fois en fonction des besoins d'un utilisateur,
dans laquelle une desdites méthodes est réalisée dans un module de traitement de parole (21) installé dans un système d'information aéroporté et une autre desdites méthodes est réalisée dans un module de traitement de parole (22) installé dans un système avionique modulaire intégré,
émettre des informations textuelles émises par l'une des au moins deux méthodes pour effectuer le traitement de parole réalisée dans le système avionique modulaire intégré à un système d'enregistrement d'instructions (32) et afficher lesdites informations textuelles sur une interface homme-machine,
afficher sur l'interface homme-machine des informations textuelles émises par l'autre des au moins deux méthodes de traitement de parole réalisée dans le système d'information aéroporté,
enregistrer ladite instruction de navigation dans le système d'enregistrement d'instructions (32).
